# NEW EUROPEAN PATENT SPECIFICATION

(11) **EP 2 187 493 B2**
(45) Date of publication and mention of the opposition decision: **19.07.2023**
(45) Mention of the grant of the patent: 21.02.2018
(21) Application number: 09013741.5
(22) Date of filing: 02.11.2009
(51) Int. Cl.: H02G 3/16, H02G 3/08

(54) **Junction box for electrical systems and the like**
Anschlussdose für elektrische Systeme und dergleichen
Boîte de jonction pour systèmes électriques et similaire.

(30) Priority: 18.11.2008 IT MI20082049
(43) Date of publication of application: 19.05.2010
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- EP-A- 0 448 545
- EP-A- 1 343 236
- EP-A1- 0 544 499
- EP-A1- 0 933 853
- EP-A1- 1 094 579
- EP-A2- 0 208 129
- EP-A2- 1 953 887
- CH-A- 452 646
- DE-A1- 3 414 907
- DE-A1- 3 508 693
- DE-A1- 10 018 363
- DE-U1- 20 114 145
- FR-A- 2 300 441
- FR-A1- 2 171 049
- FR-A1- 2 881 283
- GB-A- 2 238 184
- JP-A- 2001 028 810
- US-A- 5 239 129
- US-A- 5 239 129
- US-B1- 6 417 448
- Wikipedia article on junction boxes
- Extract from "CATALOGUE VIMAR" of 2003, p.454, Presentation of the product V50004
- "CATALOGUE VIMAR" of 2003
- Extract from "CATALOGUE VIMAR" of 2003, Presentation of the product V70006
- Invoice of the purchase labelled as "Ft8071000231 27-03-2008" from SAIP (seller) to VIMAR (buyer) regarding selling several items comprising a "Calotta 4 moduli CT 4" and "Codice material cliente V50004" dated 27/03/2008
- Technical drawings of V50004
- Witness statement (Mr Tivelli Massimo from VIMAR S.p.A.) about structural and functional features of V50004
- Witness statement
- Witness statement (Mr Pierluigi Passera from SAIP) about structural and functional features of V50004
- Description of structural and functional features of V50004 (Fig. 1: top plan view of V50004 with cover, Fig. 2: top plan view of V50004 in open position, Fig. 3: rear shell of V50004)
- Description of structural and functional features of V50004 in a video on a CD (3D structure, rear shell and inner guide integral with rear shell)
- Description of structural and functional features of V50004 in a video on a CD (rear shell having a guide held standardized electrical or electronic devices)
- Description of structural and functional features of V70006 (Fig. 4: top plan view of V70006, Fig. 5: top plan view of a joint, Fig. 6a, 6b: top plan view and bottom plan view of V70006 engaged with the joint)
- DIN rail. EN 50022 standard, Top hat rail IEC/EN 60715 standard: https://en.wikipedia.org/wiki/DIN rail

## Description

The present invention relates to a junction box for electrical systems and the like.

As is known, junction boxes used in the electrical systems of buildings are generally constituted by plastic boxes suitable to be flush-mounted within walls and in which the conduits that carry the electrical wires end.

Conventional types of junction box may have some parts integrated therein in order to facilitate installation, such as for example preweakened portions for inserting the ends of the conduits, ribs or other members that allow to fix the accessories by means of self-tapping screws and the like.

DE20114145U1, EP1343236A1, CH452646 and DE3414907A1 all disclose a box provided with receiving means integrated with the bottom of the box and adapted to receive electrical accessories of different types.

GB2238184A discloses a box wherein, conventionally, a metal rail may be fastened to the bottom for supporting an electrical switch or other electrical apparatus.

Some junction boxes are also preset for being coupled in series.

The aim of the present invention is to provide a junction box for electrical systems and the like that is improved with respect to conventional types of box in various constructive and functional aspects.

An object of the invention is to provide a junction box that is adapted to accommodate electrical apparatuses of various kinds, facilitating their installation.

A particular object of the invention is to provide a junction box that can accommodate electrical and electronic apparatuses, i.e., apparatuses provided with connectors that are standardized according to DIN standards, without the need to install any adapter.

A further object is to provide a junction box that allows easy and reliable wiring and facilitates the use of terminal strips.

A further object of the present invention is to provide a junction box that is preset for easy and reliable coupling in series, both horizontally and vertically.

A further object is to provide a junction box that can be stacked more easily in order to manage space better during transport of the boxes alone to the building site.

A further object of the present invention is to provide a box whose structure, due to its particular constructive characteristics, is capable of giving the greatest assurances of reliability and safety in use.

A further object of the present invention is to provide a box that can be provided by using commonly commercially available elements and materials and is furthermore competitive from an economic standpoint.

This aim and these and other objects that will become better apparent hereinafter are achieved by a junction box for electrical systems and the like, as claimed in the appended claims.

Further characteristics and advantages will become better apparent from the description of preferred but not exclusive embodiments of the invention, illustrated by way of non-limiting example in the accompanying drawings, wherein:

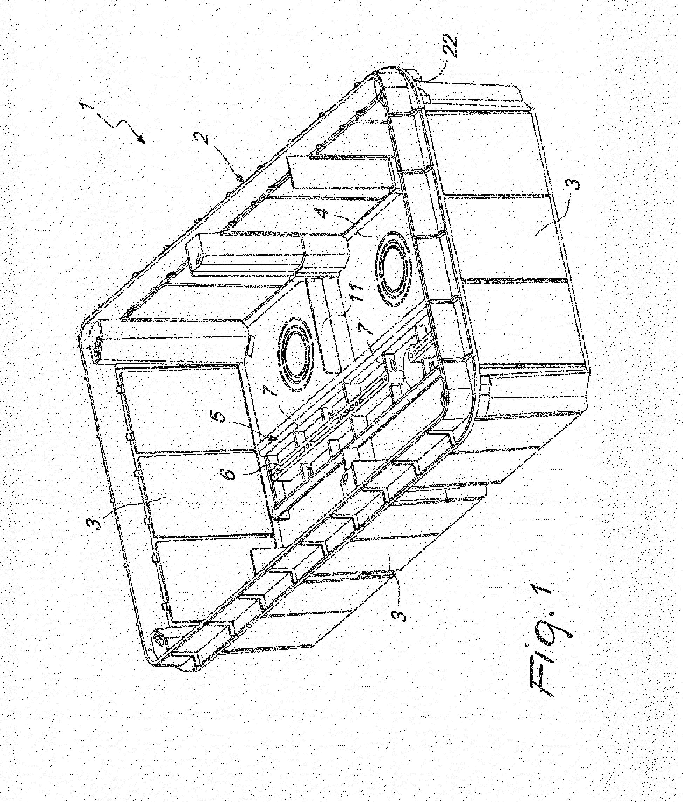

Figure 1 is a perspective view of the flush-mount box according to the present invention;

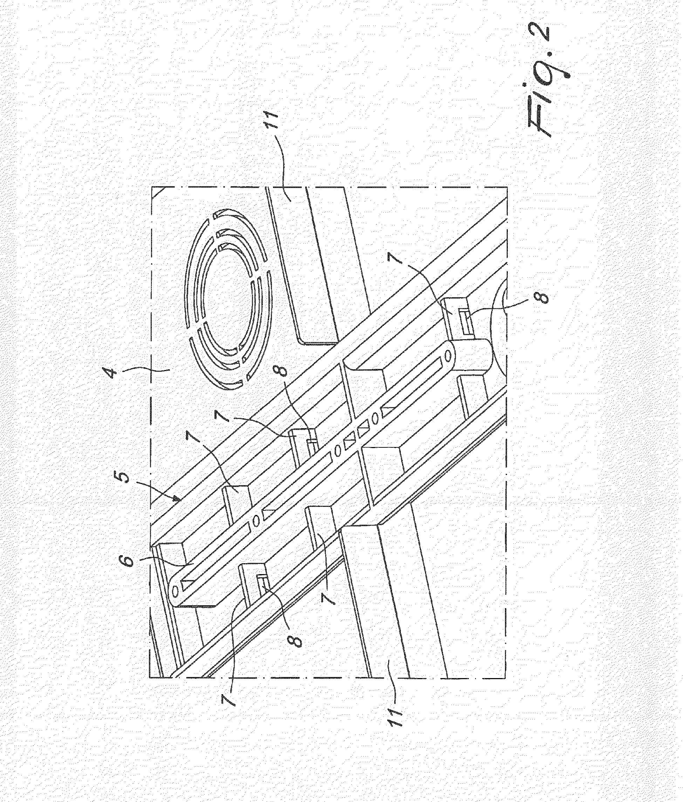

Figure 2 is a perspective view, in enlarged scale with respect to the preceding one, which illustrates in detail the region of the integrated guide;

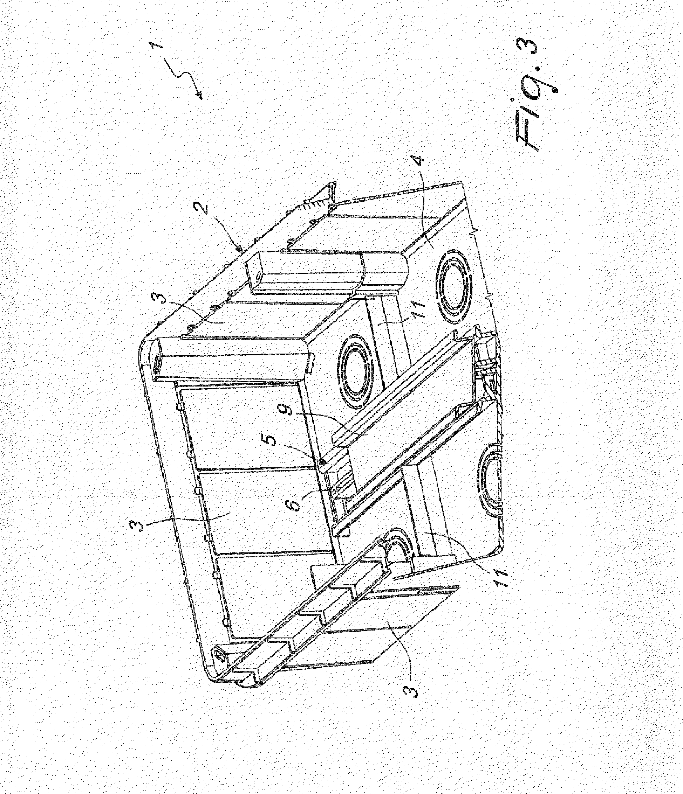

Figure 3 is a partial perspective view of the box according to the invention, with an applied guide;

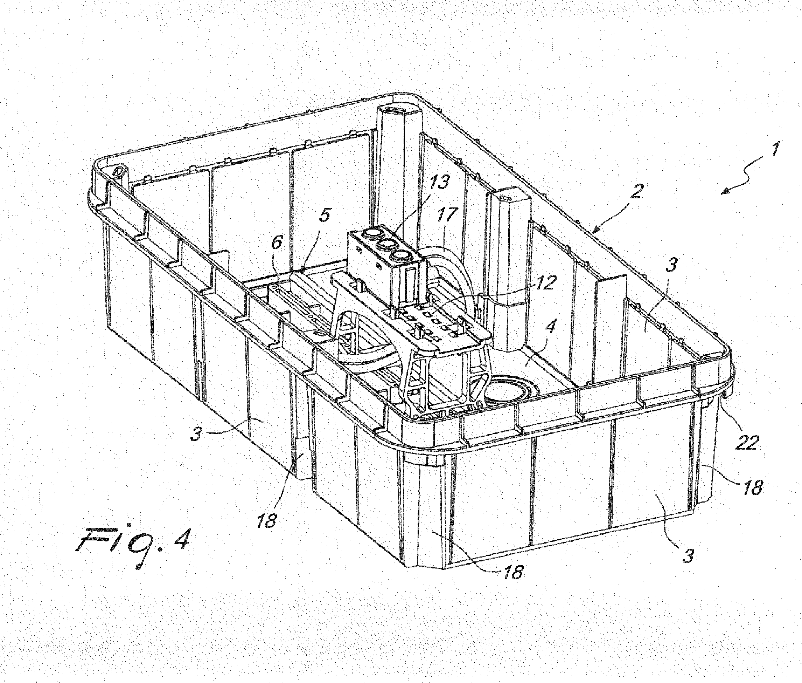

Figure 4 is a perspective view of the flush-mount box according to the present invention, with a terminal strip applied thereto;

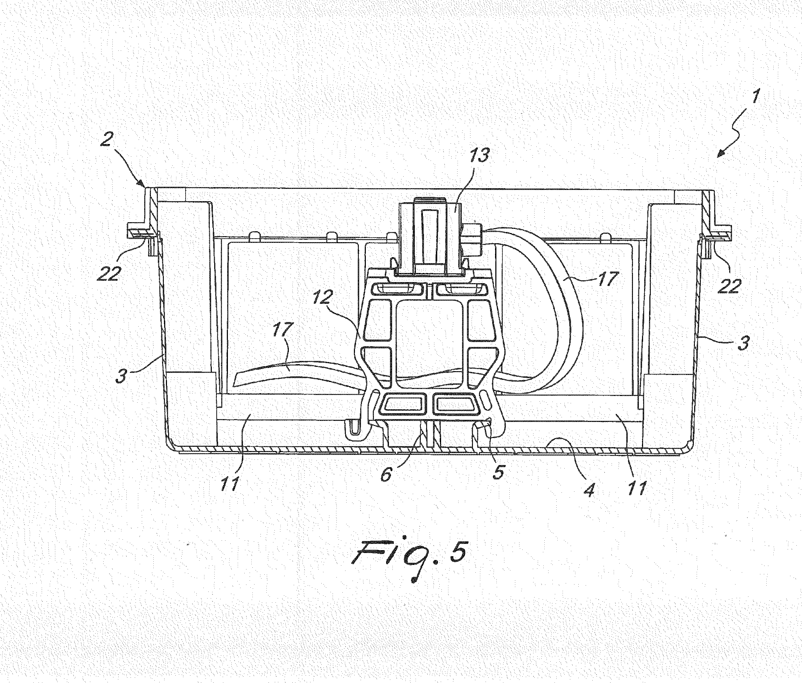

Figure 5 is a partially sectional side view of the flush-mount box according to the present invention, with the terminal strip of the preceding figure;

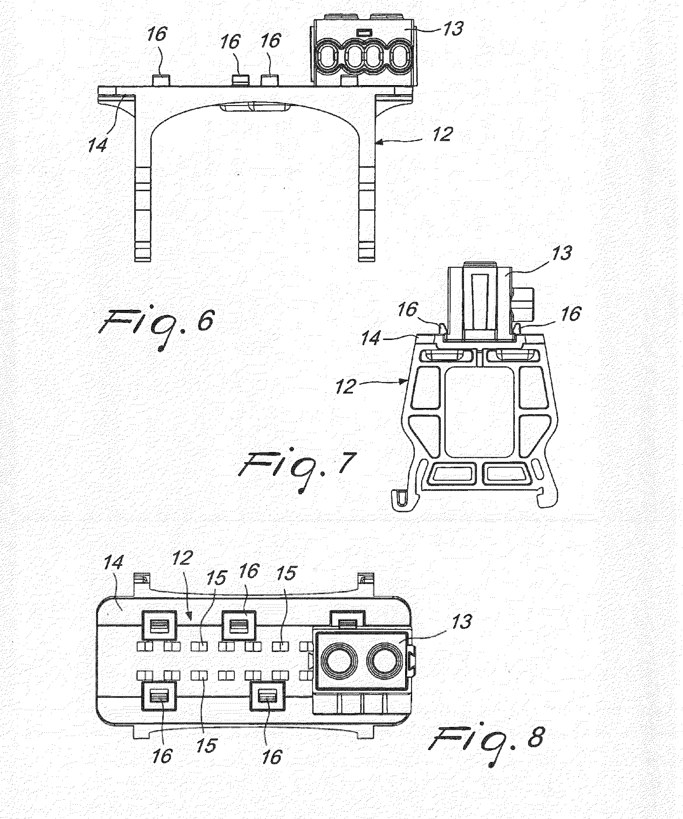

Figure 6 is a lateral elevation view of the terminal strip of the preceding figures;
Figure 7 is a front elevation view of the terminal strip of the preceding figures;
Figure 8 is a plan view of the terminal strip of the preceding figures;

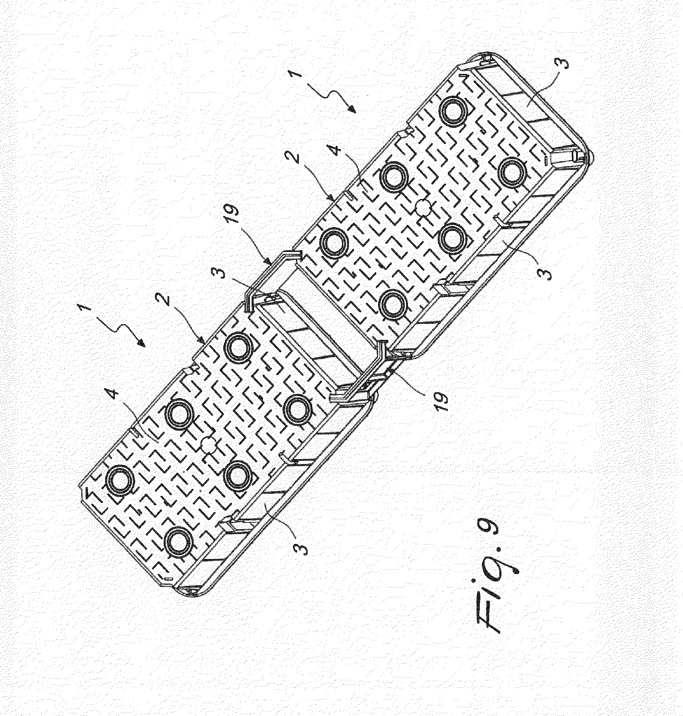

Figure 9 is a rear perspective view of two boxes joined by means of connecting members according to the invention;

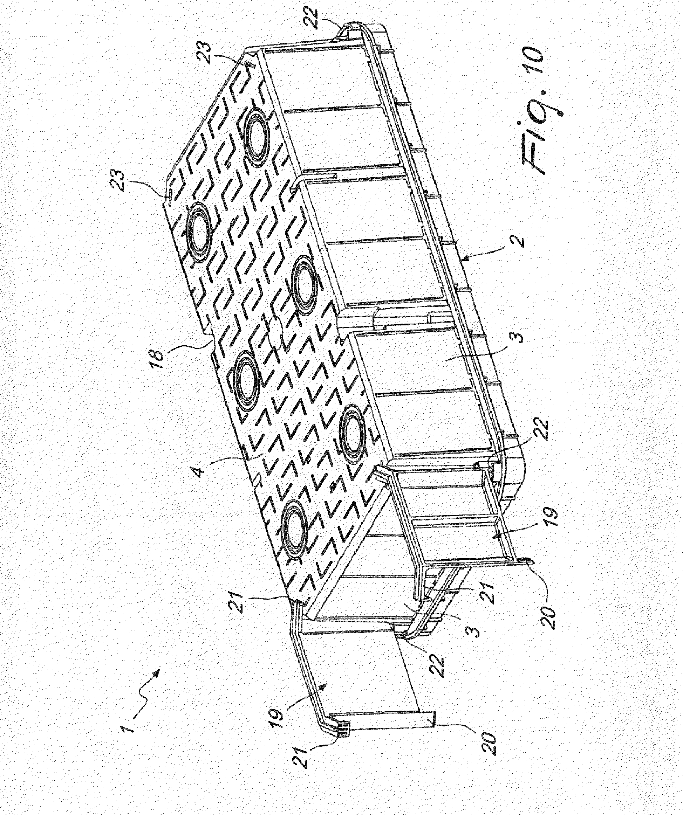

Figure 10 is a rear perspective view of a box to which the connecting members according to the invention are applied;
Figure 11 is a perspective view of two stacked boxes according to the present invention.

With reference to the cited figures, the junction box for electrical systems and the like according to the invention, generally designated by the reference numeral 1, comprises a casing 2, which is open at one end and is constituted by side walls 3 and by a bottom 4.

The side walls 3 and the bottom 4 have preweakened portions, which facilitate the opening of discrete portions of the casing for the insertion of conduits, in a per se known manner.

According to the present invention, an integrated guide 5 is monolithically formed at the bottom 4 of the casing 2. The integrated guide 5 is of a standardized type, for fixing electrical and electronic apparatuses, such as a so called DIN guide.

According to the invention, the integrated guide 5 is arranged in a central position, in the centerline of the box, and has a parallel slotted rib 6 extending longitudinally.

The slotted rib 6 allows to apply self-tapping screws, not visible in the figures, for the connection of various components.

Transverse ribs 7 connect the guide 5 to the slotted rib 6 and are provided with notches or slots 8 that allow the insertion of tie straps in order to gather the cables that are present inside the box compartment.

An additional guide 9 made of metal can be fitted to the integrated guide 5.

The additional guide 9 is used if one wishes to install apparatuses that protrude within the guide and therefore could not be fitted on the integrated guide 5 due to the presence of the slotted rib 6.

The apparatuses that protrude inside the guide are, for example, terminals, some actuation and control devices, and others.

The casing 2 also has a transverse partition 11, which has preweakened portions in such a manner that it can be pre-cut in order to install devices that straddle the partition.

The junction box 1 according to the present invention is designed to accommodate a support 12 for fixing terminal strips. The figures illustrate a terminal strip designated by the reference numeral 13.

The support 12 has a bridge-like structure with a resting plate 14 provided with a plurality of seats 15 and engagement teeth 16 to allow the mating of terminal strips 13 of modular sizes.

The support 12 and the corresponding system of modular terminal strips 13 allows to meet a need that is increasingly felt by installation workers who need to use equipotential terminal strips, inside junction boxes, in order to allow the tidy and reliable connection of multiple conductors.

Single-pole terminals are currently used and the cables, two or three, are twisted together and inserted in the terminal.

There are also equipotential terminal strips which however have excessively bulky dimensions and therefore are hardly usable inside the boxes.

In both cases, the terminal strips are provided inline.

The support system with modular terminal strips according to the present invention provides terminal strips characterized in that they are very compact and can be applied by means of the support 12 to the integrated guide 5 formed on the bottom of the box.

The wires 17 are first connected to the terminal strip 13, then the support 12 is fixed to the integrated guide 5, taking care to group the cables 17, making them pass below the support. Finally, the terminal strip 13 is fixed to the support 12, thus providing tidy and reliable internal wiring.

The junction box according to the present invention is also provided with means for facilitating the stacking of two or more boxes.

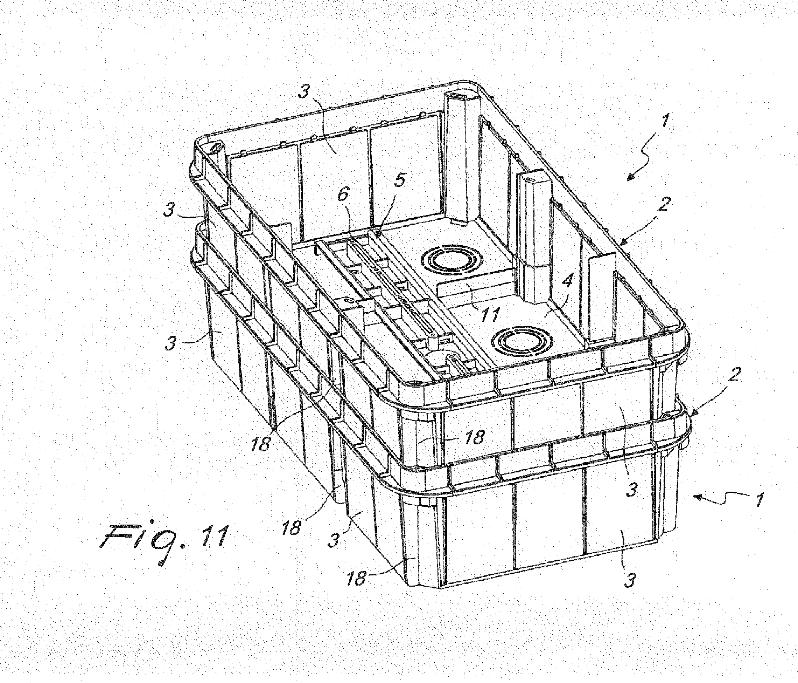

The stacking means are constituted by regions 18 having hollows and recesses that allow the interpenetration of the boxes, as shown schematically in Figure 11.

The stacking means allow to manage space better during transport of the boxes to the building site.

The boxes according to the present invention can be stacked by superimposing them partially, i.e., for approximately one third of their depth.

The junction box according to the present invention also has joining means adapted to mate two or more boxes in series both horizontally and vertically.

The joining means comprises a joining member 19, which is constituted by a plate that has an upper protrusion 20 and a hook-shaped tooth 21.

The joining member 19 is engaged with the box by inserting the protrusion 20 in a pocket 22 located in the four corners of the casing 2; mating occurs by interference between the two members.

The hook-shaped tooth 21 is inserted in a cutout 23 arranged on the bottom of the box.

The joining means ensure stable and strong connection between the casings.

In practice it has been found that the invention achieves the intended aim and objects, a junction box having been provided which offers the possibility to mount on the bottom electrical and electronic devices by means of a guide that is integrated in the bottom of the box.

This application claims the priority of Italian Patent Application No. MI2008A002049, filed on November 18, 2008, the subject matter of which is incorporated herein by reference.

## Claims

1. A junction box for electrical systems and the like, comprising a casing (2) open at one end and constituted by side walls (3) and by a bottom (4) comprising an integrated guide (5) of a standardized type said integrated guide (5) of a standardized type being a guide for the connection of electrical and electronic devices **characterized in that** the integrated guide (5) is formed monolithically with said casing (2), said integrated guide (5) is arranged in a central position, in the centerline of the box, and is provided inside it, in a parallel position, with a slotted rib (6) that allows the application of self-tapping screws for the connection of various components.

2. The junction box according to claim 1, **characterized in that** it comprises transverse ribs (7) that connect said integrated guide (5) to said slotted rib (6) and have notches or slots (8) that allow the insertion of tie straps to gather the wires that are present inside the box compartment.

3. The junction box according to one or more of the preceding claims, **characterized in that** it comprises an additional guide (9) made of metal that can be mounted on said integrated guide (5).

4. The junction box according to one or more of the preceding claims, **characterized in that** it comprises a transverse partition (11) provided with preweakened portions so that it can be pre-cut in order to mount devices that straddle said partition inside said casing (2).

5. The junction box according to one or more of the preceding claims, **characterized in that** it comprises internal wiring means which constitute a provision for the accommodation of terminal strips, said means for internal wiring being constituted by a support (12) for modular terminal strips (13).

6. The junction box according to claim 5, **characterized in that** said support (12) has a bridge-like structure with a supporting plate (14) provided with a plurality of seats (15) and engagement teeth (16) in order to allow the coupling of modular terminal strips (13); said support being associatable with said integrated guide (5).

7. The junction box according to one or more of the preceding claims, **characterized in that** it comprises stacking means for facilitating the stacking of two or more boxes, said stacking means comprising regions constituted by recesses and hollows that allow the interpenetration of two boxes by approximately one third of their depth.

8. The junction box according to one or more of the preceding claims, **characterized in that** it comprises joining means (19) adapted to join two or more boxes in series, both horizontally and vertically, said joining means comprising a joining member constituted by a plate that has an upper protrusion (20) and a hook-shaped tooth (21); said joining member being engageable with said casing (2) by inserting said protrusion (20) in a pocket (22) formed in each corner of said casing (2); said hook-shaped tooth (21) being inserted in a respective cutout (23) formed on the bottom of the box.

## Patentansprüche

1. Eine Anschlussdose für elektrische Systeme und dergleichen, die ein Gehäuse (2) umfasst, das an einem Ende offen ist und aus Seitenwänden (3) und einem Boden (4) besteht, eine integrierte Führung (5) von standardisiertem Typ umfassend, wobei die integrierte Führung (5) von standardisiertem Typ eine Führung für die Verbindung elektrischer und elektronischer Vorrichtungen ist, **dadurch gekennzeichnet, dass** die integrierte Führung (5) monolithisch mit dem Gehäuse (2) geformt ist, wobei die integrierte Führung (5) in einer zentralen Position, in der Mittellinie der Dose, angeordnet und innerhalb dieser, in einer parallelen Position, mit einer geschlitzten Rippe (6) versehen ist, welche die Anbringung von Schneidschrauben für den Anschluss verschiedener Komponenten ermöglicht.

2. Die Anschlussdose gemäß Anspruch 1, **dadurch gekennzeichnet, dass** sie Querrippen (7) umfasst, die die integrierte Führung (5) mit der geschlitzten Rippe (6) verbinden und die Nuten oder Schlitze (8) haben, die das Einführen von Binderiemen zum Zusammenbinden der Drähte ermöglichen, die in dem Innenraum der Dose vorhanden sind.

3. Die Anschlussdose gemäß einem oder mehreren der obigen Ansprüche, **dadurch gekennzeichnet, dass** sie eine zusätzliche Führung (9) aus Metall umfasst, die auf der integrierten Führung (5) montiert werden kann.

4. Die Anschlussdose gemäß einem oder mehreren der obigen Ansprüche, **dadurch gekennzeichnet, dass** sie eine transversale Trennwand (11) umfasst, die mit Sollbruchstellen versehen ist, so dass sie zur Montage von Vorrichtungen, die die Trennwand in dem Gehäuse (2) überspannen, vorgeschnitten werden kann.

5. Die Anschlussdose gemäß einem oder mehreren der obigen Ansprüche, **dadurch gekennzeichnet, dass** sie interne Verdrahtungsmittel umfasst, die eine Einrichtung zur Aufnahme von Klemmleisten bilden, wobei die Mittel zur internen Verdrahtung aus einem Träger (12) für modulare Klemmleisten (13) bestehen.

6. Die Anschlussdose gemäß Anspruch 5, **dadurch gekennzeichnet, dass** der Träger (12) eine brückenartige Struktur mit einer Stützplatte (14) hat, die mit einer Vielzahl von Sitzen (15) und Eingriffszähnen (16) ausgestattet ist, um die Kopplung modularer Klemmleisten (13) zu ermöglichen, wobei der Träger mit der integrierten Führung (5) verbindbar ist.

7. Die Anschlussdose gemäß einem oder mehreren der obigen Ansprüche, **dadurch gekennzeichnet, dass** sie Stapelmittel zum Erleichtern des Stapelns von zwei oder mehr Dosen umfasst, wobei die Stapelmittel Bereiche umfassen, die aus Vertiefungen und Hohlräumen bestehen und die Durchdringung zweier Dosen in ungefähr einem Drittel ihrer Tiefe ermöglichen.

8. Die Anschlussdose gemäß einem oder mehreren der obigen Ansprüche, **dadurch gekennzeichnet, dass** sie Verbindungsmittel (19) umfasst, ausgebildet, um zwei oder mehr Dosen, sowohl horizontal als auch vertikal, in Serie zu verbinden, wobei die Verbindungsmittel ein Verbindungsglied umfassen, bestehend aus einer Platte, die einen oberen Vorsprung (20) und einen hakenförmigen Zahn (21) hat; wobei das Verbindungsglied in das Gehäuse (2) eingreifen kann durch Einführen des Vorsprungs (20) in eine Vertiefung (22), die in jeder Ecke des Gehäuses (2) geformt ist; wobei der hakenförmige Zahn (21) in eine entsprechende Aussparung (23) eingeführt wird, die im Boden der Dose angebracht ist.

## Revendications

1. Boîtier de jonction pour systèmes électriques et similaires, comprenant un compartiment (2) qui est ouvert à une extrémité et constitué par des parois latérales (3) et par un fond (4] comprenant un guide intégré (5) de type standardisé, ledit guide intégré (5) de type standardisé étant un guide pour la connexion de dispositifs électriques et électroniques, **caractérisé en ce que** le guide intégré (5) est monobloc avec ledit compartiment (2), ledit guide intégré (5) est disposé dans une position centrale, dans la ligne centrale du boîtier, et est pourvu dans son intérieur, dans une position parallèle, d'une nervure fendue (6) qui permet l'application de vis autotaraudeuses pour la connexion de divers composants.

2. Boîtier de jonction selon la revendication 1, **caractérisé en ce qu'**il comprend des nervures transversales (7) qui connectent ledit guide intégré (5) à ladite nervure fendue (6) et comportent des entailles ou des fentes (8) qui sont aptes à permettre l'insertion de brides de fixation pour rassembler les fils qui sont présents à l'intérieur du compartiment du boîtier.

3. Boîtier de jonction selon une ou plusieurs des revendications précédentes, **caractérisé en ce qu'**il comprend un guide supplémentaire (9) composé de métal qui peut être monté sur ledit guide intégré (5).

4. Boîtier de jonction selon une ou plusieurs des revendications précédentes, **caractérisé en ce qu'**il comprend une cloison transversale (11) pourvue de section pré-fragilisées de manière à ce qu'elle puisse être prédécoupée afin de monter des dispositifs qui enjambent ladite cloison à l'intérieur dudit compartiment (2).

5. Boîtier de jonction selon une ou plusieurs des revendications précédentes, **caractérisé en ce qu'**il comprend des moyens de câblage internes prévus pour le logement de borniers, les moyens de câblage internes étant constitués par un support (12) pour des borniers modulaires (13).

6. Boîtier de jonction selon la revendication 5, **caractérisé en ce que** ledit support (12) a une structure en forme de pont dotée d'une plaque support (14) pourvue d'une pluralité de sièges (15) et de dents d'engagement (16) afin de permettre le couplage de borniers modulaires (13); ledit support pouvant être associé audit guide intégré (5).

7. Boîtier de jonction selon une ou plusieurs des revendications précédentes, **caractérisé en ce qu'**il comprend des moyens d'empilement pour faciliter l'empilement de deux boîtiers ou plus, lesdits moyens d'empilement comprenant des zones constituées par des retraits ou des creux qui permettent l'interpénétration de deux boîtiers sur environ un tiers de leur profondeur.

8. Boîtier de jonction selon une ou plusieurs des revendications précédentes, **caractérisé en ce qu'**il comprend des moyens de jonction (19) qui sont aptes à joindre deux boîtiers ou plus en série, à la fois horizontalement et verticalement, lesdits moyens de jonction comprenant un élément de jonction constitué par une plaque qui comporte une saillie supérieure (20) et une dent en forme de crochet (21); ledit élément de jonction pouvant être engagé dans ledit compartiment (2) en insérant ladite saillie (20) dans une poche (22) formée dans chaque coin dudit compartiment (2); ladite dent en forme de crochet (21) étant insérée dans une découpe respective (23) pratiquée sur le fond du boîtier.
